# EUROPEAN PATENT APPLICATION

(11) **EP 4 625 522 A1**
(43) Date of publication of application: **01.10.2025**
(21) Application number: 25162042.3
(22) Date of filing: 06.03.2025
(51) Int. Cl.: H01M 4/131, H01M 4/36, H01M 4/62, H01M 10/052, H01M 10/42, H01M 4/02

(54) **CATHODE LITHIUM COMPENSATION AGENT, PREPARATION METHOD THEREOF AND CATHODE ELECTRODE**

(30) Priority: 29.03.2024 CN 202410383178
(71) Applicant: Beijing WeLion New Energy Technology Co., Ltd, 102402 Beijing (CN)
(72) Inventor: LIU, Jiaqiang, Beijing, 102402 (CN); CUI, Shaolun, Beijing, 102402 (CN); LIU, Shuai, Beijing, 102402 (CN); YANG, Qi, Beijing, 102402 (CN); YU, Huigen, Beijing, 102402 (CN)
(74) Representative: Ström & Gulliksson AB

(57) **Abstract**

The present disclosure relates to the technical field of lithium ion batteries, in particular to a cathode lithium compensation agent, a preparation method thereof and a cathode electrode. The cathode lithium compensation agent comprising a cathode lithium compensation material, and a modified material which is crosslinked and wound on the surface of the cathode lithium compensation material from inside to outside, wherein the modified material comprises a conductive agent and a catalyst, and a functional group in the conductive agent is bonded with a free hydroxyl group on the surface of the catalyst; wherein the conductive agent is a linear or tubular one-dimensional conductive agent. According to the cathode lithium compensation agent provided by the present disclosure, the decomposition potential of a cathode lithium compensation material is effectively reduced, and the lithium supplement effect of the cathode lithium compensation material is fully exerted; meanwhile, the cathode lithium compensation agent also improves the conductivity, and avoids the problem of poor contact in the electrode.

## Description

### FIELD

The present disclosure relates to the technical field of lithium ion batteries, in particular to a cathode lithium compensation agent and a preparation method thereof, and a cathode electrode containing the cathode lithium compensation agent.

### BACKGROUND

With the development of lithium ion batteries, both the power battery field and the energy storage field have imposed higher requirements on the energy density of the batteries. However, the lithium ion batteries will generate a solid electrolyte membrane (SEI membrane) on the surface of the anode electrode in the formation process, a part of active lithium ions in the battery will be consumed in the process, which causes irreversible capacity loss of the lithium ion batteries. In order to compensate for the capacity loss, the lithium supplement technologies have been gradually developed, the lithium supplement technologies are divided into two categories, namely the anode electrode lithium supplement technology and the cathode lithium compensation technology, but the anode electrode lithium supplement technology is restrained by the requirements of cost and industrial application, it cannot be applied on a large scale; in contrast, the cathode lithium compensation materials have drawn the widespread attention from the market due to the characteristics such as low cost, easy synthesis process, and high compatibility with the existing battery production process.

Among the cathode lithium compensation materials, sacrificial organic lithium supplement material has high theoretical capacity and desirable stability, and can realize one-time lithium supplement, thus it is a relatively suitable cathode lithium compensation material, but the sacrificial organic lithium supplement material still has some defects, for example, lithium oxalate as an organic lithium supplement material is an insulating substance having poor conductivity, ionic mobility and electrochemical activity, and can only exert the capacity at a voltage over 4.7V, the material is obviously unsuitable for the current electrolyte solution system and a majority of the commercial cathode electrode materials.

In order to enable the cathode lithium compensation material to exert capacity under a low voltage, the recrystallization or the grinding process is usually adopted in the prior art to combine catalyst, conductive agent and the cathode lithium compensation material together to reduce the reaction potential of the cathode lithium compensation material, but the two methods are prone to cause that the three materials (i.e., the conductive agent, the catalyst and the cathode lithium compensation material) are not combined together tightly, which result in the problem of poor catalytic effect in the practical application process, in addition, the holes generated after decomposition of the cathode lithium compensation material are prone to cause the defect of poor contact in the electrode.

### SUMMARY

The present disclosure aims to overcome the aforementioned technical problems, and provides a novel cathode lithium compensation agent and a preparation method thereof, and a cathode electrode containing the cathode lithium compensation agent, the cathode lithium compensation agent causes that cathode lithium compensation material, modified conductive agent and catalyst are combined tightly, thereby effectively reducing the reaction potential of the cathode lithium compensation agent and fully exerting the lithium supplement effect of the cathode lithium compensation material; moreover, the cathode lithium compensation agent also improves the conductivity, and in the practical application process, even if holes are generated after decomposition of the cathode lithium compensation material, the specific three-dimensional structure of the cathode lithium compensation agent also avoids the problem of poor contact in the electrode.

To achieve the above objects, the first aspect of the present disclosure provides a cathode lithium compensation agent comprising a cathode lithium compensation material, and a modified material which is crosslinked and wound on the surface of the cathode lithium compensation material from inside to outside; wherein the modified material comprises a conductive agent and a catalyst, and a functional group in the conductive agent is bonded with a free hydroxyl group on the surface of the catalyst;
wherein the conductive agent is a linear or tubular one-dimensional conductive agent.

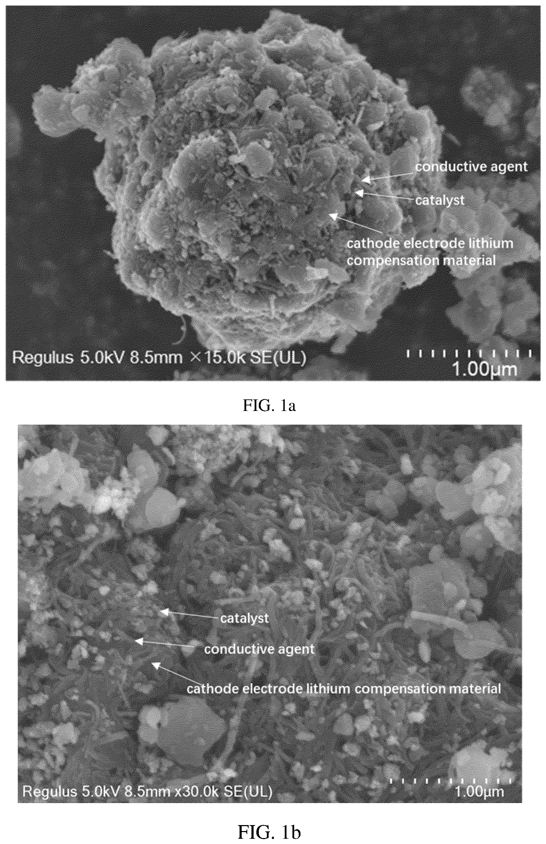

Unless otherwise specified in the present disclosure, "a modified material which is crosslinked and wound on the surface of the cathode lithium compensation material from inside to outside" refers to that during the in-situ formation process of the cathode lithium compensation agent, the modified material is tightly wound on the surface of the continuously formed the cathode lithium compensation material, as clearly illustrated by FIG. 1, the modified material and the cathode lithium compensation material form a three-dimensional spheroidal structure in a cross-linking and winding manner.

Unless otherwise specified in the present disclosure, room temperature refers to 25±2°C.

The second aspect of the present disclosure provides a method for preparing a cathode lithium compensation agent comprises the following steps:
(1) performing a first dispersion on a dispersion liquid containing a catalyst and a conductive agent, so as to connect a free hydroxyl group on the catalyst surface with a functional group in the conductive agent through the bonding effect, and subjecting the mixed solution to a first drying to obtain a modified material;
(2) subjecting the modified material, a dispersant and water to a second dispersion to obtain a dispersion liquid containing the modified material;
(3) adding a lithium-containing alkaline solution and an acidic solution into the dispersion liquid containing the modified material respectively under the stirring condition, subjecting the lithium-containing alkaline solution and the acidic solution to co-precipitation to prepare a cathode lithium compensation material; crosslinking and winding the modified material on the surface of the cathode lithium compensation material from inside to outside to obtain a cathode lithium compensation agent-rich precipitate;
(4) subjecting the cathode lithium compensation agent-rich precipitate to a filtering and a second drying sequentially to prepare a cathode lithium compensation agent;
   wherein the conductive agent is a linear or tubular one-dimensional conductive agent.

The third aspect of the present disclosure provides a cathode electrode comprises the cathode lithium compensation agent provided according to the first aspect, or the cathode lithium compensation agent prepared with the method provided according to the second aspect.

Compared with the prior art, the present disclosure has the following advantages:
(1) the present disclosure provides the cathode lithium compensation agent, wherein the modified material is formed by bonding a functional group in the conductive agent with a free hydroxyl group on the catalyst surface, and the modified material is crosslinked and wound on the surface of the cathode lithium compensation material from inside to outside, such that the conductive agent, the catalyst and the cathode lithium compensation material are tightly combined to form a stable, crosslinked and wound three-dimensional spheroidal structure, the conductive agent, the catalyst and the cathode lithium compensation material are tightly combined together, due to the synergistic effect of the conductive agent and the catalyst, thereby reducing the delithiation potential of the cathode lithium compensation agent, increasing the delithiation capacity of the cathode lithium compensation agent, improving the electrochemical performance and conductivity of the cathode lithium compensation agent; in the meanwhile, the cathode lithium compensation agent also solves the problem that the cathode lithium compensation agent generates holes after decomposition in the formation process, and the specific three-dimensional structure of the cathode lithium compensation agent is still stable, so that the problem of poor contact in the electrode is avoided, and the conductivity is enhanced;
(2) the preparation method provided by the present disclosure adopts the technical means of first dispersion (especially ultrasonic dispersion) and first drying (especially spray drying) to uniformly disperse the catalyst particles on the surface of the conductive agent, and enable the catalyst particles and the conductive agent to be tightly combined; in addition, the catalyst particles are used as nucleation sites of the cathode lithium compensation material in the dispersion liquid containing the modified material, so that the cathode lithium compensation material is heterogeneously nucleated on the surface of the catalyst particles, and a stable three-dimensional spheroidal structure is formed by adopting the specific stirring conditions and co-precipitation conditions to ensure that the conductive agent is gradually wound on the surface of the cathode lithium compensation material which is subjected to continuous nucleation and in-situ synthesis, such that the conductive agent, the catalyst and the cathode lithium compensation material are tightly combined together; moreover, the preparation method also simplifies the technological process and facilitates the industrial production;
(3) the cathode lithium compensation agent provided by the present disclosure has a strong mutual bonding force, and the separation problem of the catalyst, the conductive agent and the cathode lithium compensation material shall not be worried in the subsequent application process, thus the cathode lithium compensation agent can be directly used as an additive and added into the cathode electrode slurry, thereby fully exerting the lithium supplement effect of the cathode lithium compensation agent under the existing system; moreover, the low delithiation potential allows the cathode lithium compensation agent to be adapted to the existing electrolyte system and be compatible with the existing commercial cathode electrode material, the lithium ion batteries containing the cathode lithium compensation agent have higher electrochemical properties, especially the capacity performance and cycle performance.

### BRIEF DESCRIPTION OF THE DRAWINGS

FIG. 1a and FIG. 1b illustrate the Scanning Electron Microscope (SEM) photograph of the cathode lithium compensation agent S1 provided by Example 1 at 15k and 30k respectively;
FIG. 2 shows a Mapping graph of the cathode lithium compensation agent S1 provided by Example 1;

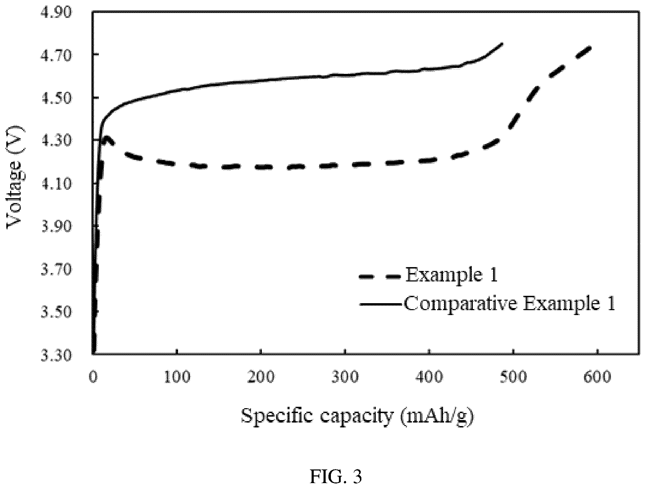

FIG. 3 illustrates a charging curve of button cells assembled with the cathode lithium compensation agents of Example 1 and Comparative Example 1.

### DETAILED DESCRIPTION

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

Unless otherwise specified in the present disclosure, "first" and "second" neither indicate a sequential order, nor impose limitations to the materials or steps, the expressions only serve to distinguish or indicate that they are not the same material or step. For example, "first" and "second" in the terms "first dispersion" and "second dispersion" only indicate that the two dispersion processes are not the same dispersion process.

The first aspect of the present disclosure provides a cathode lithium compensation agent comprising a cathode lithium compensation material, and a modified material which is crosslinked and wound on the surface of the cathode lithium compensation material from inside to outside; wherein the modified material comprises a conductive agent and a catalyst, and a functional group in the conductive agent is bonded with a free hydroxyl group on the surface of the catalyst;
wherein the conductive agent is a linear or tubular one-dimensional conductive agent.

The inventors of the present disclosure have discovered in research that the dispersion liquid containing the conductive agent having a functional group is bonded with a free hydroxyl group on the catalyst surface, and the conductive agent and the catalyst are tightly combined through a first drying, especially a spray drying; wherein the conductive agent (in particular the carbon nanotube and/or carbon nanofiber) has a high specific surface area, such that more catalyst particles can be dispersed on the surface of the conductive agent; in addition, the catalyst nanoparticles distributed on the surface of the conductive agent can be used as nucleation sites of the cathode lithium compensation material in an aqueous solution, so that the cathode lithium compensation material is heterogeneously nucleated on the catalyst surface; during the nucleation process of the cathode lithium compensation material, along with the continuous stirring of the solution, the conductive agent is gradually wound on the surface of the cathode lithium compensation material which is continuously nucleated, thereby forming a stable three-dimensional spheroidal structure.

Moreover, the specific three-dimensional structure enables the catalyst, the conductive agent and the cathode lithium compensation material to be tightly combined, the particles of the formed cathode lithium compensation agent are uniformly distributed from inside to outside, the catalyst and the conductive agent are uniformly dispersed, the catalytic activity of the catalyst and the electronic conductance of the conductive agent are fully exerted, thus the reaction potential of the cathode lithium compensation agent is effectively reduced; in addition, the specific three-dimensional structure causes that the separation problem of the catalyst, the conductive agent and the cathode lithium compensation material shall not be worried in the subsequent application process, thus the cathode lithium compensation agent can be directly used as an additive and added into the cathode electrode slurry, thereby fully exerting the lithium supplement effect of the cathode lithium compensation agent under the existing system.

In addition, due to the winding structure of the conductive agent in the cathode lithium compensation agent particles, even if the cathode lithium compensation material is decomposed and disappeared during the formation process, it is unlikely to generate the large pores, and the winding structure of the residual conductive agent after completion of the reaction of the cathode lithium compensation material, can further improve the conductivity and avoid the problem of poor contact in the electrode.

As illustrated in FIG. 1, the SEM photograph of the cathode lithium compensation agent provided in the present disclosure shows that the cathode lithium compensation agent is formed by a plurality of cathode lithium compensation materials, many catalysts and a plurality of conductive agents are crosslinked and wound from inside to outside to form a three-dimensional spheroidal structure. Therefore, the cathode lithium compensation agent provided by the present disclosure has a crosslinked and wound three-dimensional spheroidal structure.

The specific three-dimensional structure provided by the present disclosure enables the conductive agent, the catalyst and the cathode lithium compensation material in the cathode lithium compensation agent to be tightly combined; in addition, it solves the holes generated in the cathode lithium compensation material after the decomposition, avoids the problem of poor contact in the electrode, and effectively provides the conductivity and the catalytic activity.

In some embodiments of the present disclosure, preferably, the cathode lithium compensation agent has a decomposition potential less than or equal to 4.7V, more preferably less than or equal to 4.5V, further preferably within the range of 3.5-4.5V, for example, 3.5V, 3.6V, 3.7V, 3.8V, 4V, 4.1V, 4.2V, 4.4V, 4.5V, and a random value within the range consisting of any two numerical values. The cathode lithium compensation agent provided by the present disclosure has a low decomposition potential, is obviously suitable for the existing electrolyte system, and fully exerts the lithium supplement effect.

Unless otherwise specified in the present disclosure, the decomposition patent is measured by half-cells test method.

In some embodiments of the present disclosure, preferably, the cathode lithium compensation agent has a conductivity within the range of 2×10⁻⁴-2×10⁻² S/cm, for example, 2×10⁻⁴ S/cm, 5×10⁻⁴ S/cm, 8×10⁻⁴ S/cm, 1×10⁻³ S/cm, 5×10⁻³ S/cm, 8×10⁻³ S/cm, 1×10⁻² S/cm, 2×10⁻² S/cm, and a random value within the range consisting of any two numerical values, more preferably within the range of 1×10⁻³-2×10⁻² S/cm.

In the present disclosure, the conductivity parameter is measured by power resistance meter.

In some embodiments of the present disclosure, preferably, the cathode lithium compensation agent has an average particle size within the range of 0.1-20µm, for example, 0.1µm, 0.5µm, 1µm, 2µm, 5µm, 10µm, 20µm, and a random value within the range consisting of any two numerical values, more preferably within the range of 0.5-5µm. In the present disclosure, when the average particle size is too small, it is difficult to form a stable spherical structure in which the conductive agent, the catalyst and the cathode lithium compensation material are crosslinked and wound, and it is easy to separate the cathode lithium compensation material from the conductive agent, which affects the delithiation effect; when the average particle size is too large, the cathode lithium compensation material is prone to form large pores during the application process of adding the cathode lithium compensation material to the cathode electrode, resulting in poor contact in the electrode, thereby affecting the capacity exertion of the cathode electrode. If the average particle size satisfies the above-defined range, particularly an average particle size in a preferred range, the adverse effects can be effectively avoided.

In the present disclosure, the average particle size parameter is measured by a laser particle size analyzer.

In the present disclosure, there is a wide selection range for the preparation method of the cathode lithium compensation agent. Preferably, the cathode lithium compensation agent is prepared through an in-situ reaction of the cathode lithium compensation material and the modified material; further preferably, a lithium-containing alkaline solution and an acidic solution are respectively added into a dispersion liquid containing the modified material under the stirring condition, the lithium-containing alkaline solution and the acidic solution are subjected to co-precipitation to prepare the cathode lithium compensation material, and the modified material is crosslinked and wound on the surface of the cathode lithium compensation material from inside to outside.

In the present disclosure, the specific stirring condition and co-precipitation condition are adopted, so that the in-situ synthesized cathode lithium compensation material uses the catalyst particles as nucleation sites, and the cathode lithium compensation material are heterogeneously nucleated on the catalyst surface to form a stable, crosslinked and wound three-dimensional spheroidal structure.

Unless otherwise specified in the present disclosure, the cathode lithium compensation agent comprises a cathode lithium compensation material and a modified material, wherein the modified material includes a conductive agent and a catalyst, and a functional group in the conductive agent is bonded with a free hydroxyl group on the catalyst surface. That is, the cathode lithium compensation agent comprises a cathode lithium compensation material, a conductive agent and a catalyst. In the present disclosure, the cathode lithium compensation agent may comprise other ingredients, in addition to the cathode lithium compensation material, the conductive agent and the catalyst.

In some embodiments of the present disclosure, preferably, the cathode lithium compensation agent is composed of a cathode lithium compensation material and a modified material. That is, the cathode lithium compensation agent provided by the present disclosure comprises a cathode lithium compensation material, a conductive agent and a catalyst.

In some embodiments of the present disclosure, further preferably, based on the total weight of the cathode lithium compensation agent, the cathode lithium compensation material is contained in an amount of 30-99wt%, for example, 30wt%, 45wt%, 60wt%, 70wt%, 80wt%, 90wt%, 99wt%, and a random value within the range consisting of any two numerical values, more preferably 60-90wt%; the modified material is contained in an amount of 1-70wt%, for example, 1wt%, 10wt%, 20wt%, 30wt%, 40wt%, 55wt%, 70wt%, and a random value within the range consisting of any two numerical values, more preferably 10-40wt%.

In some embodiments of the present disclosure, more preferably, based on the total weight of the cathode lithium compensation agent, the conductive agent is contained in an amount of 0.5-40wt%, for example, 0.5wt%, 1wt%, 5wt%, 7wt%, 10wt%, 15wt%, 20wt%, 25wt%, 30wt%, 40wt%, and a random value within the range consisting of any two numerical values, more preferably 7-25wt%; the catalyst is contained in an amount of 0.5-30wt%, for example, 0.5wt%, 1wt%, 3wt%, 5wt%, 8wt%, 10wt%, 15wt%, 30wt%, and a random value within the range consisting of any two numerical values, more preferably 3-15wt%.

In some embodiments of the present disclosure, the cathode lithium compensation material is contained in an amount of 30-99wt%, preferably 60-90wt%; the conductive agent is contained in an amount of 0.5-40wt%, preferably 7-25wt%; the catalyst is contained in an amount of 0.5-30wt%, preferably 3-15wt%, based on the total weight of the cathode lithium compensation agent.

In the present disclosure, a cathode electrolyte lithium supplement agent satisfying the above-mentioned specific content range has the high electrochemical activity and conductivity.

In some embodiments of the present disclosure, preferably, the molar ratio of functional group in the conductive agent to free hydroxyl group on the catalyst surface is (1-4) : 1, such as 1:1, 1.5:1, 1.6:1, 1.7:1, 1.8:1, 1.9:1, 2:1, 3:1, 4:1, and a random value within the range consisting of any two numerical values, more preferably (1.5-2) : 1. When the molar ratio of functional group in the conductive agent to free hydroxyl group on the catalyst surface falls into the preferred range, the catalyst particles are uniformly attached to the surface of the conductive agent through the bonding effect, one on hand, the binding action of the conductive agent and the catalyst is improved; on the other hand, it is beneficial to the heterogeneous nucleation of the cathode lithium compensation material on the catalyst surface, so that the conductive agent and the catalyst are uniformly distributed inside and on the surface of the cathode lithium compensation material, the cathode lithium compensation material, the conductive agent and the catalyst are combined tightly to form a stable three-dimensional structure.

In some embodiments of the present disclosure, further preferably, the mass fraction of the functional group in the conductive agent is within the range of 0.1-10wt%, for example, 0.1wt%, 0.2wt%, 0.5wt%, 1wt%, 2wt%, 5wt%, 10wt%, and a random value within the range consisting of any two numerical values, more preferably within the range of 0.2-5wt%; the mass fraction of the free hydroxyl group on the catalyst surface is within the range of 0.1-5wt%, for example, 0.1wt%, 0.5wt%, 1wt%, 1.5wt%, 2wt%, 5wt%, and a random value within the range consisting of any two numerical values, more preferably within the range of 0.5-2wt%.

Unless otherwise specified in the present disclosure, the mass fraction of the functional group or the mass fraction of the free hydroxyl group is measured by the fluorescence method.

In some embodiments of the present disclosure, preferably, the functional group in the conductive agent is selected from carboxyl and/or amino.

In a specific embodiment of the present disclosure, the functional group-containing conductive agent may be prepared through a method, or may be commercially available, and the content is not repeatedly described herein, as long as the mass fraction of the functional group in the conductive agent satisfies within the range of 0.1-10wt%, more preferably within the range of 0.2-5wt%.

In a specific embodiment of the present disclosure, the free hydroxyl group on the catalyst surface is voluntarily formed by metal ions on the catalyst surface and water molecules in the air, or a plasma treatment.

The present disclosure has a wide selection range for the type of the cathode lithium compensation material. Preferably, the cathode lithium compensation material is selected from the sacrificial organic lithium supplement material; more preferably at least one selected from the group consisting of Li₂C₂O₄, Li₂C₄O₄, Li₂C₃O₅ and Li₂C₄O₆.

In the present disclosure, there is a wide selection ranges for the type of the conductive agent. Preferably, the conductive agent is selected from carbon nanotube and/or carbon nanofiber. In the present disclosure, the carbon nanotube is selected from a single-walled carbon nanotube and/or a multi-walled carbon nanotube.

The carbon nanotube and/or the carbon nanofiber with a high specific surface area are adopted in the present disclosure, so that the catalyst particles are fully dispersed on the surface of the carbon nanotube and/or the carbon nanofiber, it further facilitates the heterogeneous nucleation of the cathode lithium compensation material on the catalyst surface.

In some embodiments of the present disclosure, preferably, the conductive agent has an aspect ratio within the range of 50-50,000, for example, 50, 100, 500, 800, 1,000, 1,500, 1,800, 2,000, 5,000, 10,000, 20,000, 50,000, and a random value within the range consisting of any two numerical values, more preferably within the range of 500-20,000.

In the present disclosure, the aspect ratio parameter refers to ratio of length to diameter.

In some embodiments of the present disclosure, further preferably, the conductive agent has a length within the range of 5-100µm, for example, 5µm, 20µm, 50µm, 60µm, 80µm, 100µm, and a random value within the range consisting of any two numerical values, more preferably within the range of 50-100µm; and a diameter within the range of 2-100nm, for example, 2nm, 5nm, 10nm, 20nm, 50nm, 80nm, 100nm, and a random value within the range consisting of any two numerical values, preferably within the range of 5-50nm.

In some embodiments of the present disclosure, preferably, the catalyst is a metal compound which catalyzes the cathode lithium compensation material at room temperature with a decomposition energy barrier less than or equal to 4.4eV. That is, the present disclosure defines that the catalyst is not only the metal compound, but also the metal compound which catalyzes the cathode lithium compensation material at room temperature with a decomposition energy barrier less than or equal to 4.4eV.

Unless otherwise specified in the present disclosure, the catalyst is a metal compound which catalyzes the cathode lithium compensation material at room temperature with a decomposition energy barrier less than or equal to 4.4eV calculated according to the Transition State Theory.

In some embodiments of the present disclosure, further preferably, the catalyst is at least one selected from the group consisting of NiO, Ni₂O₃, NiO₂, MnO₂, Mn₂O₃, Mn₃O₄, CoO, Co₂O₃, Co₃O₄, MgO, FeO, Fe₂O₃, Fe₃O₄, ZnO, CuO, Ni(OH)₂, Co(OH)₂, Mg(OH)₂ and Mn(OH)₂.

In some embodiments of the present disclosure, further preferably, the catalyst has an average particle size within the range of 10-1,000nm, for example, 10nm, 20nm, 50nm, 80nm, 100nm, 200nm, 500nm, 1,000nm, and a random value within the range consisting of any two numerical values, more preferably within the range of 20-100nm.

The second aspect of the present disclosure provides a method for preparing a cathode lithium compensation agent comprises the following steps:
(1) performing a first dispersion on a dispersion liquid containing a catalyst and a conductive agent, so as to connect a free hydroxyl group on the catalyst surface with a functional group in the conductive agent through the bonding effect, and subjecting the mixed solution to a first drying to obtain a modified material;
(2) subjecting the modified material, a dispersant and water to a second dispersion to obtain a dispersion liquid containing the modified material;
(3) adding a lithium-containing alkaline solution and an acidic solution into the dispersion liquid containing the modified material respectively under the stirring condition, subjecting the lithium-containing alkaline solution and the acidic solution to co-precipitation to prepare a cathode lithium compensation material; crosslinking and winding the modified material on the surface of the cathode lithium compensation material from inside to outside to obtain a cathode lithium compensation agent-rich precipitate;
(4) subjecting the cathode lithium compensation agent-rich precipitate to a filtering and a second drying sequentially to prepare a cathode lithium compensation agent;
   wherein the conductive agent is a linear or tubular one-dimensional conductive agent.

In some embodiments of the present disclosure, in step (1), the mass ratio of the catalyst in the mixed solution to the conductive agent is preferably (0.5-30): (0.5-40), more preferably (3-15): (7-25).

In some embodiments of the present disclosure, in step (1), in the dispersion liquid containing the conductive agent, the content of the conductive agent is preferably within the range of 1-8wt%, for example, 1wt%, 2wt%, 3wt%, 5wt%, 8wt%, and a random value within the range consisting of any two numerical values, more preferably within the range of 2-5wt%.

In some embodiments of the present disclosure, in the dispersion liquid containing conductive agent, a solvent of the dispersion liquid is preferably at least one selected from the group consisting of N-methyl pyrrolidone, 1,2-dichlorobenzene, dimethyl formamide and dimethyl acetamide.

The present disclosure has a wide selection range for preparing the dispersion liquid containing the conductive agent, as long as the content range of the conductive agent is satisfied. In the present disclosure, the conductive agent and a solvent of the dispersion liquid are mixed to obtain the dispersion liquid containing the conductive agent, wherein the content of the conductive agent in the dispersion liquid is within the range of 1-8wt%, preferably within the range of 2-5wt%.

In some embodiments of the present disclosure, the content of the catalyst in the mixed solution is preferably within the range of 0.1-30wt%, for example, 0.1wt%, 0.5wt%, 1wt%, 2wt%, 5wt%, 10wt%, 20wt%, 30wt%, and a random value within the range consisting of any two numerical values, more preferably within the range of 0.5-5wt%.

In the present disclosure, the first dispersion serves to bond the functional group in the conductive agent with the free hydroxyl group on the catalyst surface to obtain the mixed solution containing a modified material. Preferably, the first dispersion mode is selected from ultrasonic dispersion, and a frequency is within the range of 500-5,000Hz, such as 500Hz, 1,000Hz, 1,500Hz, 2,000Hz, 3,000Hz, 5,000Hz, and a random value within the range consisting of any two numerical values, more preferably within the range of 1,000-2,000Hz; and a time is within the range of 1-30min, for example, 1min, 5min, 10min, 15min, 25min, 30min, and a random value within the range consisting of any two numerical values, more preferably within the range of 5-15min.

In the present disclosure, the first drying mode includes, but is not limited to, spray drying, microwave drying, vacuum drying, fluidized bed drying, and the like, and preferably spray drying.

In the present disclosure, the first drying aims to further promote the tight coupling of the conductive agent and the catalyst. Preferably, the first drying conditions comprise: a spraying speed within the range of 1-10mL/min, for example, 1mL/min, 2mL/min, 5mL/min, 6mL/min, 8mL/min, 10mL/min, and a random value within the range consisting of any two numerical values, more preferably within the range of 2-8 mL/min; an inlet air temperature within the range of 100-150°C, for example, 100°C, 110°C, 120°C, 130°C, 150°C, and a random value within the range consisting of any two numerical values, more preferably within the range of 110-130°C.

In the present disclosure, in step (1), the types of the catalyst and the conductive agent and the physical properties parameter thereof are defined according to the above definitions, which are not repeatedly described herein.

In the present disclosure, the second dispersion serves to obtain a uniformly dispersed dispersion liquid containing the modified material. Preferably, in step (2), the second dispersion mode is selected from mechanical stirring, and the second dispersion conditions comprise: a rotating speed within the range of 2,000-6,000 rpm, such as 2,000 rpm, 4,000 rpm, 4,500 rpm, 5,000 rpm, 6,000 rpm, and a random value within the range consisting of any two numerical values, more preferably within the range of 4,000-5,000 rpm; and a time within the range of 2-8 h, for example, 2h, 5h, 5.5h, 6h, 8h, and a random value within the range consisting of any two numerical values, more preferably within the range of 5-6 h.

In some embodiments of the present disclosure, preferably, the mass ratio of the modified material to the dispersant agent is (2-10): (0.5-10), more preferably (4-6): (1-2). In the present disclosure, the mass ratio is equivalent with to the feeding ratio or the addition ratio of the modified material to the dispersant.

In some embodiments of the present disclosure, the dispersant is preferably at least one selected from the group consisting of sodium carboxymethylcellulose, polyvinylpyrrolidone, sodium dodecyl benzene sulfonate and a silane coupling agent.

In some embodiments of the present disclosure, in step (3), a rotating speed of the stirring is preferably within the range of 30-150 rpm, for example, 30 rpm, 50 rpm, 60 rpm, 80 rpm, 100 rpm, 150 rpm, and a random value within the range consisting of any two numerical values, more preferably within the range of 50-80 rpm. In the present disclosure, when the rotating speed falls into the above-mentioned range, the conductive agent in the modified material is gradually wound on the surface of the continuously nucleated cathode electrode substrate to form a stable three-dimensional structure.

In the present disclosure, the structure of the cathode lithium compensation agent is effectively regulated and controlled by adjusting the addition flow rates of the lithium-containing alkaline solution and the acidic solution, thereby controlling the in-situ synthesis rate of the cathode lithium compensation material.

In some embodiments of the present disclosure, preferably, an addition flow rates of the lithium-containing alkaline solution and the acidic solution are respectively within the range of 0.5-20 mL/min, for example, 0.5 mL/min, 1 mL/min, 2 mL/min, 5 mL/min, 8 mL/min, 10 mL/min, 12 mL/min, 15 mL/min, 20 mL/min, and a random value within the range consisting of any two numerical values, more preferably within the range of 1-5 mL/min.

In some embodiments of the present disclosure, the molar ratio of the lithium-containing compound in the lithium-containing alkaline solution to the acidic substance in the acidic solution is preferably (1-2): 1.1, for example, 1:1.1, 1.2:1.1, 1.5:1.1, 1.8:1.1, 2:1.1, and a random value within the range consisting of any two numerical values. By adjusting the mass ratio range, the in-situ synthesized cathode lithium compensation material is further regulated and controlled.

In some embodiments of the present disclosure, preferably, the lithium-containing alkaline solution is at least one selected from the group consisting of an aqueous lithium hydroxide solution, an aqueous lithium carbonate solution, and a buffer solution consisting of lithium hydroxide and/or lithium carbonate and ammonium hydroxide.

In some embodiments of the present disclosure, further preferably, the concentration of the lithium-containing alkaline solution is within the range of 12-20wt%, and the concentration of the acidic solution is within the range of 20-40wt%.

In the present disclosure, the kind of acid in the acidic solution depends on the variety of salt in the cathode lithium compensation material, the acid includes, but is not limited to, oxalic acid, squaric acid, ketomaleoic acid, diketosuccinic acid and the like.

In some embodiments of the present disclosure, preferably, the co-precipitation conditions comprise: a temperature within the range of 20-80°C, for example, 20°C, 30°C, 40°C, 50°C, 60°C, 80°C, and a random value within the range consisting of any two numerical values, more preferably within the range of 30-60°C; a pH within the range of 7-8, for example, 7, 7.2, 7.5, 8, and a random value within the range consisting of any two numerical values, more preferably within the range of 7-7.5.

In the present disclosure, the filtering in step (4) serves to remove impurities from the cathode lithium compensation agent-rich precipitate, and the filtering mode includes, but is not limited to, centrifugal filtration and the like.

In some embodiments of the present disclosure, preferably, the conditions of the second drying in step (4) comprise: a temperature within the range of 100-200°C, for example, 100°C, 120°C, 130°C, 140°C, 150°C, 200°C, and a random value within the range consisting of any two numerical values, more preferably within the range of 100-150°C; and a time within the range of 1-10h, for example, 1 h, 2 h, 5 h, 8 h, 10 h, and a random value within the range consisting of any two numerical values, more preferably within the range of 2-8h.

The third aspect of the present disclosure provides a cathode electrode comprises the cathode lithium compensation agent provided according to the first aspect, or the cathode lithium compensation agent prepared with the method provided according to the second aspect.

In some embodiments of the present disclosure, preferably, the content of the cathode lithium compensation agent in the cathode electrode is within the range of 0.1-10wt%, for example, 0.1wt%, 0.5wt%, 1wt%, 1.5wt%, 2wt%, 3wt%, 4wt%, 5wt%, 8wt%, 10wt%, and a random value within the range consisting of any two numerical values, more preferably within the range of 0.5-5wt%.

In the present disclosure, a use of the cathode electrode in the lithium ion batteries can effectively improve the electrochemical properties of the batteries, especially the capacity performance and the cycle performance of the batteries.

According to a particularly preferred embodiment of the present disclosure, a cathode lithium compensation agent, comprising a cathode lithium compensation material, and a modified material which is crosslinked and wound on the surface of the cathode lithium compensation material from inside to outside; wherein the modified material comprises a conductive agent and a catalyst, and a functional group in the conductive agent is bonded with a free hydroxyl group on the surface of the catalyst; the cathode lithium compensation agent has a crosslinked and wound three-dimensional spheroidal structure;
wherein the cathode lithium compensation agent has a decomposition potential within the range of 3.5-4.5V, and a conductivity within the range of 2×10⁻⁴-2×10⁻² S/cm;
wherein the mass fraction of the functional group in the conductive agent is within the range of 0.2-5wt%, and the functional group is selected from carboxyl and/or amino; the conductive agent is selected from carbon nanotube and/or carbon nanofiber;
wherein the mass fraction of the free hydroxyl group on the catalyst surface is within the range of 0.5-2wt%;
wherein the catalyst is at least one selected from the group consisting of NiO, Ni₂O₃, NiO₂, MnO₂, Mn₂O₃, Mn₃O₄, CoO, Co₂O₃,Co₃O₄, MgO, FeO, Fe₂O₃, Fe₃O₄, ZnO, CuO, Ni(OH)₂, Co(OH)₂, Mg(OH)₂ and Mn(OH)₂;
wherein a lithium-containing alkaline solution and an acidic solution are added into a dispersion liquid containing the modified material respectively under the stirring condition; the lithium-containing alkaline solution and the acidic solution are subjected to co-precipitation to prepare the cathode lithium compensation material; the modified material is crosslinked and wound on the surface of the cathode lithium compensation material from inside to outside.

The present disclosure will be described in detail below with reference to examples.

### Example 1

(1) 1.25g of a catalyst (MnO₂, the mass fraction of free hydroxyl group was 0.5wt%, an average particle size was 50nm, and a decomposition energy barrier for catalyzing the cathode lithium compensation material at room temperature was 3.27eV) and 50g of a conductive agent dispersion liquid (the carboxylated multi-walled carbon nanotube NMP dispersion liquid) having a mass fraction of 5wt% were subjected to a first dispersion (a frequency was 2,000Hz, and a time was 10min) in an ultrasonic device, the obtained mixed solution was subjected to a first drying (a spraying speed was 5mL/min, and an air inlet air temperature was set to 120°C) in a spray dryer, a modified material was obtained;
   wherein the mass fraction of carboxyl in the carboxylated multi-walled carbon nanotube was 1wt%, the multi-walled carbon nanotube had an aspect ratio of 1,000, a length of 50µm, and a diameter of 50nm;
(2) the modified material and a dispersant (PVP) in a mass ratio of 5:1 and pure water were subjected to a second dispersion (with a rotating speed of 4,000 rpm for a time of 6 h), a dispersion liquid containing the modified material was obtained;
(3) the dispersion liquid containing the modified material was stirred in a reaction kettle (with a rotating speed of 50 rpm), 35g of a lithium hydroxide solution with a concentration of 20wt% and 33g of an oxalic acidic solution with a concentration of 40wt% were respectively added through a peristaltic pump; an addition flow rates of the lithium hydroxide solution and the oxalic acidic solution were controlled to be 5mL/min respectively, a cathode lithium compensation material was produced through co-precipitation (at a temperature of 40°C and a pH of 7.0) of the lithium hydroxide solution and the oxalic acidic solution, in the meanwhile, the modified material was crosslinked and wound on the surface of the cathode lithium compensation material (Li₂C₂O₄, the mass was 15g), a cathode lithium compensation agent-rich precipitate was obtained;
(4) the cathode lithium compensation agent-rich precipitate was subjected to a filtering with a centrifugal machine and a second drying (a temperature was 120°C, and a time was 5 h) in sequence, a cathode lithium compensation agent S1 was prepared;
   wherein the content of the cathode lithium compensation material (Li₂C₂O₄) was 80wt%, the content of the catalyst (MnO₂) was 6.67wt%, and the content of the conductive agent (carboxylated multi-walled carbon nanotube) was 13.33wt%, based on the total weight of the cathode lithium compensation agent S1.

FIG. 1a and FIG. 1b illustrated the SEM photograph of the cathode lithium compensation agent S1 at 15k and 30k respectively, as shown in FIG. 1a and FIG. 1b, the multi-walled carbon nanotube as a conductive agent and MnO₂ particles as a catalyst were tightly combined together through a bonding action, and the resulting modified material was crosslinked and wound on the surface of the cathode lithium compensation material from inside to outside, to form the crosslinked and wound particles having a three-dimensional spheroidal structure.

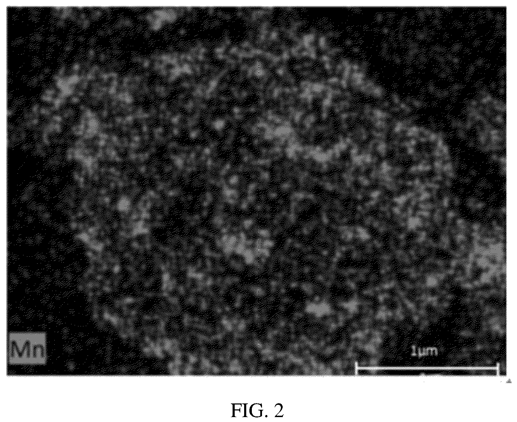

Wherein the Mapping graph of the cathode lithium compensation agent S1 was shown in FIG. 2, as can be seen from FIG. 2, in the cathode lithium compensation agent S1, the characteristic element Mn of the catalyst MnO₂ was uniformly distributed in the cathode lithium compensation material; with reference to FIG. 1a and FIG. 1b, the catalyst MnO₂ was closely attached on the multi-walled carbon nanotube, it indicated that modified material formed by bonding the catalyst MnO₂ with the multi-walled carbon nanotube was uniformly distributed around the cathode lithium compensation material.

### Example 2

The cathode lithium compensation agent was prepared according to the method in Example 1, except that
in step (1), the average particle size of the catalyst was adjusted to be 10nm;
the remaining conditions were identical with those in Example 1, a cathode lithium compensation agent S2 was prepared;
wherein the content of the cathode lithium compensation material (Li₂C₂O₄) was 80wt%, the content of the catalyst (MnO₂) was 6.67wt%, and the content of the conductive agent (carboxylated multi-walled carbon nanotube) was 13.33wt%, based on the total weight of the cathode lithium compensation agent S2.

### Example 3

The cathode lithium compensation agent was prepared according to the method in Example 1, except that
in step (1), the average particle size of the catalyst was adjusted to be 1,000nm;
the remaining conditions were identical with those in Example 1, a cathode lithium compensation agent S3 was prepared;
wherein the content of the cathode lithium compensation material (Li₂C₂O₄) was 80wt%, the content of the catalyst (MnO₂) was 6.67wt%, and the content of the conductive agent (carboxylated multi-walled carbon nanotube) was 13.33wt%, based on the total weight of the cathode lithium compensation agent S3.

### Example 4

The cathode lithium compensation agent was prepared according to the method in Example 1, except that
in step (1), the average particle size of the catalyst was adjusted to be 1,500nm;
the remaining conditions were identical with those in Example 1, a cathode lithium compensation agent S4 was prepared;
wherein the content of the cathode lithium compensation material (Li₂C₂O₄) was 80wt%, the content of the catalyst (MnO₂) was 6.67wt%, and the content of the conductive agent (carboxylated multi-walled carbon nanotube) was 13.33wt%, based on the total weight of the cathode lithium compensation agent S4.

### Example 5

The cathode lithium compensation agent was prepared according to the method in Example 1, except that
in step (1), the multi-walled carbon nanotube was regulated and controlled to have an aspect ratio of 50, a length of 5µm and a diameter of 100nm;
the remaining conditions were identical with those in Example 1, a cathode lithium compensation agent S5 was prepared;
wherein the content of the cathode lithium compensation material (Li₂C₂O₄) was 80wt%, the content of the catalyst (MnO₂) was 6.67wt%, and the content of the conductive agent (carboxylated multi-walled carbon nanotube) was 13.33wt%, based on the total weight of the cathode lithium compensation agent S5.

### Example 6

The cathode lithium compensation agent was prepared according to the method in Example 1, except that
in step (1), the multi-walled carbon nanotube was regulated and controlled to have an aspect ratio of 50,000, a length of 100µm and a diameter of 2nm;
the remaining conditions were identical with those in Example 1, a cathode lithium compensation agent S6 was prepared;
wherein the content of the cathode lithium compensation material (Li₂C₂O₄) was 80wt%, the content of the catalyst (MnO₂) was 6.67wt%, and the content of the conductive agent (carboxylated multi-walled carbon nanotube) was 13.33wt%, based on the total weight of the cathode lithium compensation agent S6.

### Example 7

The cathode lithium compensation agent was prepared according to the method in Example 1, except that
in step (1), the multi-walled carbon nanotube was regulated and controlled to have an aspect ratio of 60,000, a length of 120µm and a diameter of 2nm;
the remaining conditions were identical with those in Example 1, a cathode lithium compensation agent S7 was prepared;
wherein the content of the cathode lithium compensation material (Li₂C₂O₄) was 80wt%, the content of the catalyst (MnO₂) was 6.67wt%, and the content of the conductive agent (carboxylated multi-walled carbon nanotube) was 13.33wt%, based on the total weight of the cathode lithium compensation agent S7.

### Example 8

The cathode lithium compensation agent was prepared according to the method in Example 1, except that
in step (1), the dosage of the catalyst was regulated to be 3.75g, and the dosage of the carboxylated multi-walled carbon nanotube NMP dispersion liquid was regulated to be 125g;
the remaining conditions were identical with those in Example 1, a cathode lithium compensation agent S8 was prepared;
wherein the content of the cathode lithium compensation material (Li₂C₂O₄) was 60wt%, the content of the catalyst (MnO₂) was 15wt%, and the content of the conductive agent (carboxylated multi-walled carbon nanotube) was 25wt%, based on the total weight of the cathode lithium compensation agent S8.

### Example 9

The cathode lithium compensation agent was prepared according to the method in Example 1, except that
in step (1), the dosage of the catalyst was regulated to be 0.5g, and the dosage of the carboxylated multi-walled carbon nanotube NMP dispersion liquid was regulated to be 23.4g;
the remaining conditions were identical with those in Example 1, a cathode lithium compensation agent S9 was prepared;
wherein the content of the cathode lithium compensation material (Li₂C₂O₄) was 89.98wt%, the content of the catalyst (MnO₂) was 3wt%, and the content of the conductive agent (carboxylated multi-walled carbon nanotube) was 7.02wt%, based on the total weight of the cathode lithium compensation agent S9.

### Example 10

The cathode lithium compensation agent was prepared according to the method in Example 1, except that
in step (1), the type of a catalyst was adjusted to NiO (the mass fraction of free hydroxyl group was 0.5wt%, an average particle size was 50nm, and a decomposition energy barrier for catalyzing the cathode lithium compensation material at room temperature was 3.62eV);
the remaining conditions were identical with those in Example 1, a cathode lithium compensation agent S10 was prepared;
wherein the content of the cathode lithium compensation material (Li₂C₂O₄) was 80wt%, the content of the catalyst (NiO) was 6.67wt%, and the content of the conductive agent (carboxylated multi-walled carbon nanotube) was 13.33wt%, based on the total weight of the cathode lithium compensation agent S10.

### Example 11

The cathode lithium compensation agent was prepared according to the method in Example 1, except that
in step (1), the functional group of the conductive agent was replaced with amino, namely the aminated multi-walled carbon nanotube;
the remaining conditions were identical with those in Example 1, a cathode lithium compensation agent S11 was prepared;
wherein the content of the cathode lithium compensation material (Li₂C₂O₄) was 80wt%, the content of the catalyst (MnO₂) was 6.67wt%, and the content of the conductive agent (aminated multi-walled carbon nanotube) was 13.33wt%, based on the total weight of the cathode lithium compensation agent S11.

### Example 12

The cathode lithium compensation agent was prepared according to the method in Example 1, except that
in step (1), the type of the conductive agent was replaced with a single-walled carbon nanotube, namely a carboxylated single-walled carbon nanotube;
the remaining conditions were identical with those in Example 1, a cathode lithium compensation agent S12 was prepared;
wherein the content of the cathode lithium compensation material (Li₂C₂O₄) was 80wt%, the content of the catalyst (MnO₂) was 6.67wt%, and the content of the conductive agent (carboxylated single-walled carbon nanotube) was 13.33wt%, based on the total weight of the cathode lithium compensation agent S12.

### Example 13

The cathode lithium compensation agent was prepared according to the method in Example 1, except that
in step (3), 35g of lithium hydroxide solution with the concentration of 20wt% was replaced by 28.5g of lithium hydroxide solution with the concentration of 20wt%, and 33g of oxalic acidic solution with the concentration of 40wt% was replaced with 34g of squaric acid solution with the concentration of 40wt%;
the remaining conditions were identical with those in Example 1, a cathode lithium compensation agent S13 was prepared;
wherein the content of the cathode lithium compensation material (Li₂C₂O₄) was 80wt%, the content of the catalyst (MnO₂) was 6.67wt%, and the content of the conductive agent (carboxylated multi-walled carbon nanotube) was 13.33wt%, based on the total weight of the cathode lithium compensation agent S13.

### Example 14

The cathode lithium compensation agent was prepared according to the method in Example 1, except that
in step (1), the type of the catalyst was replaced by Co₃O₄ (the mass fraction of free hydroxyl group was 0.75wt%, an average particle size was 35nm, and a decomposition energy barrier for catalyzing the cathode lithium compensation material at room temperature was 3.12eV); the mass fraction of carboxyl in the carboxylated multi-walled carbon nanotube was replaced by 2wt%;
the remaining conditions were identical with those in Example 1, a cathode lithium compensation agent S14 was prepared;
wherein the content of the cathode lithium compensation material (Li₂C₂O₄) was 70.59wt%, the content of the catalyst (Co₃O₄) was 5.88wt%, and the content of the conductive agent (carboxylated multi-walled carbon nanotube) was 23.53wt%, based on the total weight of the cathode lithium compensation agent S14.

### Example 15

The cathode lithium compensation agent was prepared according to the method in Example 1, except that
in step (1), the type of the catalyst was replaced by MgO (the mass fraction of free hydroxyl group was 1wt%, an average particle size was 70nm, and a decomposition energy barrier for catalyzing the cathode lithium compensation material at room temperature was 4.34eV); the mass fraction of carboxyl in the carboxylated multi-walled carbon nanotube was replaced by 0.2wt%;
the remaining conditions were identical with those in Example 1, a cathode lithium compensation agent S15 was prepared;
wherein the content of the cathode lithium compensation material (Li₂C₂O₄) was 84.04wt%, the content of the catalyst (MgO) was 7wt%, and the content of the conductive agent (carboxylated multi-walled carbon nanotube) was 8.96wt%, based on the total weight of the cathode lithium compensation agent S15.

### Example 16

The cathode lithium compensation agent was prepared according to the method in Example 1, except that
in step (1), the type of the catalyst was replaced by ZnO (the mass fraction of free hydroxyl group was 0.6wt%, an average particle size was 63nm, and a decomposition energy barrier for catalyzing the cathode lithium compensation material at room temperature was 3.63eV); the mass fraction of carboxyl in the carboxylated multi-walled carbon nanotube was replaced by 5wt%;
in step (3), 35g of lithium hydroxide solution with the concentration of 20wt% was replaced by 27.7g of lithium hydroxide solution with the concentration of 20wt%, and 33g of oxalic acidic solution with the concentration of 40wt% was replaced by 34g of pyruvic acid solution with the concentration of 40wt%;
the remaining conditions were identical with those in Example 1, a cathode lithium compensation agent S16 was prepared;
wherein the content of the cathode lithium compensation material (lithium pyruvate with a molecular structure of Li₂C₃O₅) was 81.08wt%, the content of the catalyst (ZnO) was 5.41wt%, and the content of the conductive agent (carboxylated multi-walled carbon nanotube) was 13.51wt%, based on the total weight of the cathode lithium compensation agent S16.

### Example 17

The cathode lithium compensation agent was prepared according to the method in Example 1, except that
in step (1), the type of the catalyst was replaced by Co₃O₄ (the mass fraction of free hydroxyl group was 2wt%, an average particle size was 42nm, and a decomposition energy barrier for catalyzing the cathode lithium compensation material at room temperature was 3.12eV); the mass fraction of carboxyl in the carboxylated multi-walled carbon nanotube was replaced by 0.5wt%;
in step (3), 35g of lithium hydroxide solution with the concentration of 20wt% was replaced by 22.8g of lithium hydroxide solution with the concentration of 20wt%, and 33g of oxalic acidic solution with the concentration of 40wt% was replaced by 34.7g of diketosuccinic acid solution with the concentration of 40wt%;
the remaining conditions were identical with those in Example 1, a cathode lithium compensation agent S17 was prepared;
wherein the content of the cathode lithium compensation material (lithium diketosuccinate with a molecular structure of Li₂C₄O₆) was 88.24wt%, the content of the catalyst (Co₃O₄) was 2.94wt%, and the content of the conductive agent (carboxylated multi-walled carbon nanotube) was 8.82wt%, based on the total weight of the cathode lithium compensation agent S17.

### Example 18

The cathode lithium compensation agent was prepared according to the method in Example 1, except that
in step (1), the type of the catalyst was replaced by Mn₂O₃ (the mass fraction of free hydroxyl group was 1.75wt%, an average particle size was 90nm, and a decomposition energy barrier for catalyzing the cathode lithium compensation material at room temperature was 3.35eV); the type of the conductive agent was replaced with vapor grown carbon fiber (with an aspect ratio of 1,000, a length of 50µm, and a diameter of 50nm), namely carboxylated carbon fiber;
the mass fraction of carboxyl in the carboxylated carbon fiber was 0.5wt%;
the remaining conditions were identical with those in Example 1, a cathode lithium compensation agent S18 was prepared;
wherein the content of the cathode lithium compensation material (Li₂C₂O₄) was 65.21wt%, the content of the catalyst (Mn₂O₃) was 8.7wt%, and the content of the conductive agent (carboxylated vapor grown carbon fiber) was 26.09wt%, based on the total weight of the cathode lithium compensation agent S18.

### Comparative Example 1

The cathode lithium compensation agent was prepared according to the method in Example 1, except that steps (1) - (2) were absent, namely
the stirring (with a rotating speed of 50 rpm) was performed in a reaction kettle, 35g of a lithium hydroxide solution with a concentration of 20wt% and 33g of an oxalic acidic solution with a concentration of 40wt% were respectively added through a peristaltic pump; the addition flow rates of the lithium hydroxide solution and the oxalic acidic solution were controlled to be 5mL/min respectively, the co-precipitation of the lithium hydroxide solution and the oxalic acidic solution (at a temperature of 40°C and a pH of 7.0) was implemented, a cathode lithium compensation agent-rich precipitate was obtained;
the cathode lithium compensation agent-rich precipitate was subjected to a filtering with a centrifugal machine and a second drying (a temperature was 120°C, and a time was 5 h) in sequence, a cathode lithium compensation agent DS1 was prepared;
wherein the content of the cathode lithium compensation material (Li₂C₂O₄) was 100wt%, based on the total weight of the cathode lithium compensation agent DS1.

### Comparative Example 2

The cathode lithium compensation agent was prepared according to the method in Example 1, except that step (1) was absent, namely
3.75g of a catalyst (MnO₂, the mass fraction of free hydroxyl group was 0.5wt%, an average particle size was 50nm), 0.75g of dispersant (PVP) and water were subjected to a second dispersion (with a rotating speed of 4,000 rpm for a time of 6 h), a dispersion liquid was obtained;
the dispersion liquid was stirred in a reaction kettle (with a rotating speed of 50 rpm), 35g of a lithium hydroxide solution with a concentration of 20wt% and 33g of an oxalic acidic solution with a concentration of 40wt% were respectively added through a peristaltic pump; an addition flow rates of the lithium hydroxide solution and the oxalic acidic solution were controlled to be 5mL/min respectively, the cathode lithium compensation material was produced through co-precipitation (at a temperature of 40°C and a pH of 7.0) of the lithium hydroxide solution and the oxalic acidic solution, in the meanwhile, the catalyst in the dispersion liquid was distributed on the surface of the cathode lithium compensation material (Li₂C₂O₄, the mass was 15g), a cathode lithium compensation agent-rich precipitate was obtained;
the cathode lithium compensation agent-rich precipitate was subjected to a filtering with a centrifugal machine and a second drying (a temperature was 120°C, and a time was 5 h) in sequence, a cathode lithium compensation agent DS2 was prepared;
wherein the content of the cathode lithium compensation material (Li₂C₂O₄) was 80wt%, the content of the catalyst (MnO₂) was 20wt%, based on the total weight of the cathode lithium compensation agent DS2.

### Comparative Example 3

The cathode lithium compensation agent was prepared according to the method in Example 1, except that step (1) was absent, namely
3.75g of a conductive agent (a carboxylated multi-walled carbon nanotube, wherein the mass fraction of carboxyl in the carboxylated multi-walled carbon nanotube was 1wt%, the multi-walled carbon nanotube has an aspect ratio of 1,000, a length of 50µm, and a diameter of 50nm), 0.75g of a dispersant (PVP) and water were subjected to a second dispersion (with a rotating speed of 4,000 rpm for a time of 6 h), a dispersion liquid was obtained;
the dispersion liquid was stirred in a reaction kettle (with a rotating speed of 50 rpm), 35g of a lithium hydroxide solution with a concentration of 20wt% and 33g of an oxalic acidic solution with a concentration of 40wt% were respectively added through a peristaltic pump; an addition flow rates of the lithium hydroxide solution and the oxalic acidic solution were controlled to be 5mL/min respectively, a cathode lithium compensation material was produced through co-precipitation (at a temperature of 40°C and a pH of 7.0) of the lithium hydroxide solution and the oxalic acidic solution, in the meanwhile, the conductive agent was crosslinked and wound on the surface of the cathode lithium compensation material (Li₂C₂O₄, the mass was 15g), a cathode lithium compensation agent-rich precipitate was obtained;
the cathode lithium compensation agent-rich precipitate was subjected to a filtering with a centrifugal machine and a second drying (a temperature was 120°C, and a time was 5 h) in sequence, a cathode lithium compensation agent DS3 was prepared;
wherein the content of the cathode lithium compensation material (Li₂C₂O₄) was 80wt%, and the content of the conductive agent (carboxylated multi-walled carbon nanotube) was 20wt%, based on the total weight of the cathode lithium compensation agent DS3.

### Comparative Example 4

The cathode lithium compensation agent was prepared according to the method in Example 1, except that
in step (3), 15g of a cathode lithium compensation material (Li₂C₂O₄, with an average particle size of 3µm) was mixed with the dispersion liquid containing the modified material, a cathode lithium compensation agent-rich precipitate was obtained;
the cathode lithium compensation agent-rich precipitate was subjected to a filtering with a centrifugal machine and a second drying (a temperature was 120°C, and a time was 5 h) in sequence, a cathode lithium compensation agent DS4 was prepared;
wherein the content of the cathode lithium compensation material (Li₂C₂O₄) was 80wt%, the content of the catalyst (MnO₂) was 6.67wt%, and the content of the conductive agent (carboxylated multi-walled carbon nanotube) was 13.33wt%, based on the total weight of the cathode lithium compensation agent DS4.

### Comparative Example 5

The cathode lithium compensation agent was prepared according to the method in Example 1, except that
in step (1), the multi-wall carbon nanotube did not contain a functional group;
the remaining conditions were identical with those in Example, 1, a cathode lithium compensation agent DS5 was prepared;
wherein the content of the cathode lithium compensation material (Li₂C₂O₄) was 80wt%, the content of the catalyst (MnO₂) was 6.67wt%, and the content of the conductive agent (multi-walled carbon nanotube) was 13.33wt%, based on the total weight of the cathode lithium compensation agent DS5.

### Comparative Example 6

The cathode lithium compensation agent was prepared according to the method in Example 1, except that
in step (3), the dispersion liquid containing modified material was not stirred in the reaction kettle (a rotating speed was 0 rpm);
the remaining conditions were identical with those in Example, 1, a cathode lithium compensation agent DS6 was prepared;
wherein the content of the cathode lithium compensation material (Li₂C₂O₄) was 80wt%, the content of the catalyst (MnO₂) was 6.67wt%, and the content of the conductive agent (carboxylated multi-walled carbon nanotube) was 13.33wt%, based on the total weight of the cathode lithium compensation agent DS6.

### Comparative Example 7

The cathode lithium compensation agent was prepared according to the method in Example 1, except that
in step (1), the type of a conductive agent was replaced with Super P, namely carboxylated Super P;
the remaining conditions were identical with those in Example, 1, a cathode lithium compensation agent DS7 was prepared;
wherein the content of the cathode lithium compensation material (Li₂C₂O₄) was 80wt%, the content of the catalyst (MnO₂) was 6.67wt%, and the content of the conductive agent (carboxylated Super P) was 13.33wt%, based on the total weight of the cathode lithium compensation agent DS7.

### Test Example 1

Assembling and testing of the button cell: a lithium metal sheet was used as a anode electrode, the cathode lithium compensation agents of Examples 1-18 and Comparative Examples 1-7 were used for preparing the cathode electrode; the method for preparing the cathode electrode was as follows: NMP was taken as a solvent, the cathode lithium compensation agents (S1-S18 and DS1-DS7), an adhesive (PVDF) and a conductive agent (SP) in a weight ratio of 8:1:1 were mixed in the solvent NMP respectively, after the materials were uniformly mixed, the mixture was coated on an aluminum foil, the pole pieces were compacted to a density of 3g/cm³, and a button cell was assembled by using Celgard-2400 diaphragm in a vacuum glove box, the assembled button cell was subjected to the performance test.

The test method included the following steps: the button cell was charged with a charging current of 0.05C to the voltage 4.75V, the nominal capacity was 500mAh/g, the test results were shown in Table 1.

**Table 1**

| | Cathode lithium compensation material | | Catalyst | | | Conductive agent | | |
|---|---|---|---|---|---|---|---|---|
| | Type | Content, wt% | Type | Content, wt% | Free hydroxyl group, wt% | Type | Content, wt% | Functional group, wt% |
| Example 1 | Li₂C₂O₄ | 80 | MnO₂ | 6.67 | 0.5 | multi-walle d carbon nanotube | 13.33 | Carboxyl, 1 |
| Example 2 | Li₂C₂O₄ | 80 | MnO₂ | 6.67 | 0.5 | multi-wall ed carbon nanotube | 13.33 | Carboxyl, 1 |
| Example 3 | Li₂C₂O₄ | 80 | MnO₂ | 6.67 | 0.5 | multi-wall ed carbon nanotube | 13.33 | Carboxyl, 1 |
| Example 4 | Li₂C₂O₄ | 80 | MnO₂ | 6.67 | 0.5 | multi-wall ed carbon nanotube | 13.33 | Carboxyl, 1 |
| Example 5 | Li₂C₂O₄ | 80 | MnO₂ | 6.67 | 0.5 | multi-wall ed carbon nanotube | 13.33 | Carboxyl, 1 |
| Example 6 | Li₂C₂O₄ | 80 | MnO₂ | 6.67 | 0.5 | multi-wall ed carbon nanotube | 13.33 | Carboxyl, 1 |
| Example 7 | Li₂C₂O₄ | 80 | MnO₂ | 6.67 | 0.5 | multi-wall ed carbon nanotube | 13.33 | Carboxyl, 1 |
| Example 8 | Li₂C₂O₄ | 60 | MnO₂ | 15 | 0.5 | multi-wall ed carbon nanotube | 25 | Carboxyl, 1 |
| Example 9 | Li₂C₂O₄ | 89.98 | MnO₂ | 3 | 0.5 | multi-wall ed carbon nanotube | 7.02 | Carboxyl, 1 |
| Example 10 | Li₂C₂O₄ | 80 | NiO | 6.67 | 0.5 | multi-wall ed carbon nanotube | 13.33 | Carboxyl, 1 |
| Example 11 | Li₂C₂O₄ | 80 | MnO₂ | 6.67 | 0.5 | multi-wall ed carbon nanotube | 13.33 | Amino, 1 |
| Example 12 | Li₂C₂O₄ | 80 | MnO₂ | 6.67 | 0.5 | single-wall ed carbon nanotube | 13.33 | Carboxyl, 1 |
| Example 13 | Li₂C₄O₄ | 80 | MnO₂ | 6.67 | 0.5 | multi-wall ed carbon nanotube | 13.33 | Carboxyl, 1 |
| Example 14 | Li₂C₂O₄ | 70.59 | Co₃O₄ | 5.88 | 0.75 | multi-wall ed carbon nanotube | 23.53 | Carboxyl, 2 |
| Example 15 | Li₂C₂O₄ | 84.04 | MgO | 7.00 | 1.0 | multi-wall ed carbon nanotube | 8.96 | Carboxyl, 0.2 |
| Example 16 | Li₂C₃O₅ | 81.08 | ZnO | 5.41 | 0.6 | multi-wall ed carbon nanotube | 13.51 | Carboxyl, 5 |
| Example 17 | Li₂C₄O₆ | 88.24 | C_{O3}O4 | 2.94 | 2.0 | multi-wall ed carbon nanotube | 8.82 | Carboxyl, 0.5 |
| Example 18 | Li₂C₂O₄ | 65.21 | Mn₂O₃ | 8.70 | 1.75 | vapor grown carbon fiber | 26.09 | Carboxyl, 0.5 |
| Comparative Example 1 | Li₂C₂O₄ | 100 | / | / | / | / | / | / |
| Comparative Example 2 | Li₂C₂O₄ | 80 | MnO₂ | 20 | 0.5 | / | / | / |
| Comparative Example 3 | Li₂C₂O₄ | 80 | / | / | / | multi-wall ed carbon nanotube | 20 | Carboxyl, 1 |
| Comparative Example 4 | Li₂C₂O₄ | 80 | MnO₂ | 6.67 | 0.5 | multi-wall ed carbon nanotube | 13.33 | Carboxyl, 1 |
| Comparative Example 5 | Li₂C₂O₄ | 80 | MnO₂ | 6.67 | 0.5 | multi-wall ed carbon nanotube | 13.33 | / |
| Comparative Example 6 | Li₂C₂O₄ | 80 | MnO₂ | 6.67 | 0.5 | multi-wall ed carbon nanotube | 13.33 | Carboxyl, 1 |
| Comparative Example 7 | Li₂C₂O₄ | 80 | MnO₂ | 6.67 | 0.5 | Super P | 13.33 | Carboxyl, 1 |

**Table 1 (continued)**

| | Cathode lithium compensation agent | | | | Specific capacity of the charging process to 4.5V, mAh/g |
|---|---|---|---|---|---|
| | Delithiation potential, V | Conductivity, S/cm | Average particle size, µm | Crosslinked and wound three-dimensional spheroidal structure | |
| Example 1 | 4.18 | 1.80×10⁻² | 3 | √ | 519 |
| Example 2 | 4.33 | 1.78×10⁻² | 3 | √ | 408 |
| Example 3 | 4.35 | 1.68×10⁻² | 3 | √ | 381 |
| Example 4 | 4.41 | 1.28×10⁻² | 3 | √ | 273 |
| Example 5 | 4.37 | 1.55×10⁻² | 3 | √ | 362 |
| Example 6 | 4.34 | 1.60×10⁻² | 3 | √ | 404 |
| Example 7 | 4.39 | 1.05×10⁻² | 3 | √ | 288 |
| Example 8 | 4.26 | 1.95×10⁻² | 3 | √ | 412 |
| Example 9 | 4.4 | 5.95×10⁻³ | 3 | √ | 332 |
| Example 10 | 4.36 | 1.75×10⁻² | 3 | √ | 428 |
| Example 11 | 4.31 | 1.88×10⁻² | 3 | √ | 463 |
| Example 12 | 4.32 | 1.79×10⁻² | 3 | √ | 403 |
| Example 13 | 3.8 | 1.76×10⁻² | 3 | √ | 398 |
| Example 14 | 4.3 | 1.93×10⁻² | 3 | √ | 452 |
| Example 15 | 4.37 | 8.95×10⁻³ | 3 | √ | 378 |
| Example 16 | 4.12 | 1.91×10⁻² | 3 | √ | 390 |
| Example 17 | 4.18 | 6.73×10⁻³ | 3 | √ | 321 |
| Example 18 | 4.35 | 1.96×10⁻² | 3 | √ | 386 |
| Comparative Example 1 | 4.65 | 1.22×10⁻⁵ | 3 | × | 63 |
| Comparative Example 2 | 4.56 | 3.53×10⁻⁵ | 3 | × | 165 |
| Comparative Example 3 | 4.58 | 1.75×10⁻² | 3 | √ | 124 |
| Comparative Example 4 | 4.60 | 8.32×10⁻³ | 3 | × | 204 |
| Comparative Example 5 | 4.53 | 1.26×10⁻² | 3 | √ | 216 |
| Comparative Example 6 | 4.54 | 4.56×10⁻³ | 3 | × | 104 |
| Comparative Example 7 | 4.57 | 2.97×10⁻⁴ | 3 | × | 75 |

As can be seen from the results in Table 1, compared with the cathode lithium compensation agents prepared in Comparative Examples 1-7, the cathode lithium compensation agents prepared in Examples 1-18 with the method of the present disclosure have a lower delithiation potential and a higher lithium supplement capacity. The delithiation potential of the cathode lithium compensation agents prepared in Examples 1-18 is generally below 4.4V, the delithiation potential of some preferred examples can be reduced to about 4.2V, and the lower delithiation potential can match with the existing electrolyte system and is compatible with the existing commercial cathode electrode material; in contrast, the delithiation potential of the cathode lithium compensation agents prepared in Comparative Examples 1-7 are generally higher than 4.5V, they are incompatible with the existing battery system; generally, on the premise of considering the energy density of the battery, the development of the gram capacity of the lithium supplement agents needs to reach 300mAh/g or more to produce a desired lithium supplement effect, the development of the gram capacity of the cathode lithium compensation agents in Examples 1-18 of The present disclosure can basically reach 300mAh/g or higher, the preferable embodiments can reach 500mAh/g or more, while the development of the gram capacity of the lithium supplement agents in Comparative Examples 1-7 is generally about 200mAh/g, or even lower, the lithium supplement agents cannot achieve the desirable lithium supplement effect.

### (1) Influence of an average particle size of the catalyst particles on properties of the cathode lithium compensation agent.

As can be seen from the comparison results of the data in Examples 1-4, the average particle size of the catalyst particles will affect the delithiation potential, the exertion of gram capacity during the charging process, and the electron conductivity of the cathode lithium compensation agents; when the catalyst particle size is too large (greater than 1,000nm) or too small (less than 10nm), both may cause the increased delithiation potential and the decreased gram capacity during the charging process, the reasons may be that when the catalyst particles are smaller, the catalyst particles are prone to agglomerate, the hydroxyl on the catalyst surface cannot sufficiently contact with the carboxyl on the carbon nanotube surface, resulting in poor combination effect of the hydroxyl and the carboxyl; when the catalyst particles are larger, the in-situ nucleation effect of the cathode lithium compensation agent is affected, resulting in deterioration of the catalytic effect, the increased delithiation platform, and the decreased gram capacity during the charging process.

### (2) Influence of the aspect ratio of the conductive agent on properties of the cathode lithium compensation agent.

As can be seen from the comparison results of the data in Example 1 and Examples 5-7, when the aspect ratio of the carbon nanotube is too small (less than 50) or too large (more than 50,000), both may cause the reduced specific charge capacity of the cathode lithium compensation agent, the reasons may be that when the aspect ratio is smaller, it is difficult to form a suitable winding structure inside the cathode lithium compensation agent, thus the conductivity inside the cathode lithium compensation agent is not uniform; when the aspect ratio is larger, the carbon nanotubes are prone to agglomerate together, such that the cathode lithium compensation material cannot be uniformly nucleated between the catalyst and the carbon nanotubes, thereby affecting the delithiation capacity of the cathode lithium compensation agent.

### (3) Influence of the content of the cathode lithium compensation material on properties of the cathode lithium compensation agent.

As illustrated by the comparison results of the data in Example 1 and Examples 8-9, when the content of the cathode lithium compensation material in the cathode lithium compensation agent is lower, the delithiation potential is low, but the self-winding of the carbon nanotube is likely to occur, resulting in the low utilization rate of the conductive network and the decreased lithium supplement capacity; when the content of the cathode lithium compensation material in the cathode lithium compensation agent is higher, the distribution of the catalyst and the carbon nanotube in the cathode lithium compensation agent is relatively small, which results in deterioration of the catalytic effect, elevated delithiation platform, and decreased lithium supplement capacity.

### (4) Influence of catalyst types on properties of the cathode lithium compensation agent.

As illustrated by the comparison results of the data in Example 1 and Example 10, when NiO is used as the catalyst, the cathode lithium compensation agents can still have exerted the specific capacity of 428mAh/g, it demonstrates that the strategy adopted in the present disclosure is also applicable to other catalysts.

### (5) Influence of conductive agent types on properties of the cathode lithium compensation agent.

As shown by the comparison results of the data in Example 1 and Example 11, when the aminated multi-walled carbon nanotube is adopted, the cathode lithium compensation agents can exert a specific capacity of 463mAh/g, and the lithium supplement agent can achieve a desirable catalytic effect by using the carbon nanotubes with different groupings.

As illustrated by the comparison results of the data in Example 1 and Comparative Example 5, when the experiment is performed by using the carbon nanotube without modification with a functional group, although a crosslinked and wound three-dimensional spheroidal structure can be formed, the catalyst cannot be tightly combined with the carbon nanotube, and in the finally formed cathode lithium compensation agent, the catalyst and the multi-walled carbon nanotube are mostly separated, the catalytic effect of the catalyst and the conductive effect of the conductive agent cannot effectively form a synergy, so that the delithiation platform is not significantly reduced, and the delithiation capacity of 4.5V is only 216 mAh/g.

As illustrated by the comparison results of the data in Example 1 and Comparative Example 7, if the point-like conductive agent Super P is used for performing the experiment, the formed modified material cannot form a tightly wound three-dimensional spheroidal structure during the process of synthesizing the cathode lithium compensation, so that the modified material is prone to agglomerate, the catalyst and the reduced material cannot be in sufficient contact with the cathode lithium compensation material, such that the catalytic effect of the catalyst and the conductive effect of the conductive agent are greatly reduced, the delithiation platform is not significantly reduced, and the delithiation capacity at 4.5V is only 75 mAh/g.

### (6) Synergistic effect between the catalyst and the conductive agent in the cathode lithium compensation agent.

As illustrated by the comparison results of the data in Example 1 and Comparative Example 1, with reference to the charging curve 3 of the button cell assembled with the cathode lithium compensation agents of Example 1 and Comparative Example 1, compared to the unmodified cathode lithium compensation agent DS1, the delithiation platform of the cathode lithium compensation agent S1 shows a significant decrease, and the delithiation capacity of the cut-off voltage 4.5V exhibits an obvious increase.

Comparative Example 2 defines the case that only the catalyst is added during the in-situ synthesis process of the cathode lithium compensation agent, the delithiation potential is 4.56V, and its specific charge capacity is only 165 mAh/g; Comparative Example 3 defines the case that only the multi-walled carbon nanotube is added during the in-situ synthesis process of the cathode lithium compensation agent, the delithiation potential is 4.58V, and its specific charge capacity is only 124 mAh/g; Example 1 describes the case that both the catalyst and the multi-walled carbon nanotube are added during the in-situ synthesis process of the cathode lithium compensation agent, the delithiation potential is 4.18V, and its specific charge capacity reaches 519 mAh/g; as can be seen from the results in Example 1 and Comparative Examples 2-3, the coating of only the catalyst or the coating of only the conductive agent has a limited effect on reducing the voltage platform; when the cathode lithium compensation agent lacks the catalyst, it easily cause the delithiation difficulty of the lithium supplement agent, and the poor catalytic effect; when the cathode lithium compensation agent lacks the carbon nanotube, it is prone to cause deterioration of electronic conductivity in the lithium supplement agent, and the catalyst cannot be tightly combined with the lithium supplement agent; the present disclosure utilizes the functional group in the conductive agent and the free hydroxyl group on the catalyst surface to form a modified material through the bonding action, so that the modified material is crosslinked and wound on the surface of the cathode lithium compensation material from inside to outside, the conductive agent, the catalyst and the cathode lithium compensation material are tightly combined to form a stable, crosslinked and wound three-dimensional spheroidal structure, due to the synergistic action of the conductive agent and the catalyst, the delithiation potential of the cathode lithium compensation agent is reduced, and the delithiation capacity of the cathode lithium compensation agent is increased.

### (7) Influence of the preparation method on the cathode lithium compensation agent.

Comparative Example 4 recites a cathode lithium compensation agent synthesized in a non-in-situ manner, as can be seen from comparison results of the data in Example 1 and Comparative Example 4, the delithiation potential of the cathode lithium compensation agent in Comparative Example 4 is 4.60V, and the specific charge capacity is only 204 mAh/g; when the non-in-situ is adopted, that is, only the carbon nanotube, the catalyst and the synthesized cathode lithium compensation material are subjected to mixing and drying, the catalyst, the conductive agent and the cathode lithium compensation material cannot be tightly combined, the internal delithiation of the cathode lithium compensation material is difficult, it causes that the reduction of a voltage platform is limited, and the capacity exerted by the cathode lithium compensation material is low; the present disclosure adopts the technical means of first dispersion and first drying to ensure that the catalyst particles are uniformly dispersed on the surface of the conductive agent, thus the catalyst and the conductive agent are tightly combined; in addition, the catalyst particles are used as nucleation sites of the cathode lithium compensation material in the dispersion liquid containing modified material, so that the cathode lithium compensation material is heterogeneously nucleated on the surface of catalyst particles, the adoption of the specific stirring conditions and the co-precipitation conditions causes that the conductive agent is gradually wound on the surface of the cathode lithium compensation material which is continuously nucleated and synthesized in-situ, thereby forming a stable, crosslinked and wound three-dimensional spheroidal structure, the tight combination of the catalyst, the conductive agent and the cathode lithium compensation material is achieved, the delithiation potential of the cathode lithium compensation material is reduced, and the delithiation capacity of the cathode lithium compensation material is improved.

As shown by the comparison results of the data in Example 1 and Comparative Example 6, during the in-situ synthesis process of the cathode lithium compensation agent, if the stirring is not performed, the in-situ nucleation sites of the cathode lithium compensation agent cannot be effectively controlled, it causes that the cathode lithium compensation agent, the catalyst and the conductive agent are not uniformly distributed in the structure of the final formed cathode lithium compensation agent, the delithiation of a portion of the cathode lithium compensation material which is not in contact with the catalyst and the conductive agent may be difficult, it finally results in the low delithiation capacity of the cathode lithium compensation agent.

### Test Example 2

The cathode lithium compensation agents provided in Examples 1-18 and Comparative Examples 1-7 were added into the cathode electrode for use; a cathode electrode material to be measured (for example, lithium iron phosphate, and the same gain effect was observed in the other cathode electrode material such as ternary cathode electrode material, and the conventional cathode electrode systems such as lithium cobaltate), the cathode lithium compensation agent, a binder (PVDF) and a conductive agent SP were mixed in a ratio of 93:2:2.5:2.5, a dispersant N-methyl pyrrolidone (NMP) was added and blended to form a slurry, which was uniformly coated on an aluminum foil, the coated aluminum foil was dried and pressed into a cathode electrode plate, which was punched and subjected to drying in a drying oven at 80°C for 12 h for later use. A metal lithium sheet was used as a counter electrode, LiPF₆ electrolyte with a concentration of 1mol/L was used, the solvent was a mixture of three components EC, DMC and EMC in a volume ratio of 1:1:1, a Celgard 2400 microporous polypropylene membrane was used as a diaphragm, a CR2032 type button cell was assembled into in the MIKROUNA argon glove box.

The charging and discharging test of the button cell was performed on the LAND battery test system, the first charging and discharging cycle comprised charging to 3.7V at the current of 0.5C (1C=160mAh/g), and then charging to 4.5V at the current of 0.05C, such that the cathode lithium compensation agent was completely decomposed to release the active lithium ions, and then discharged to 2.5V at the current of 0.5C, the subsequent charging and discharging cycle test was performed with the current of 0.5C in a voltage window of 2.5-3.7V, the test results were shown in Table 2.

**Table 2**

| | Specific charge capacity, mAh/g | Specific discharge capacity, mAh/g | Discharge capacity retention rate after 200 cycles of charging and discharging with a current of 0.5C, % |
|---|---|---|---|
| Example 1 | 170.1 | 155.81 | 98.50 |
| Example 2 | 168.44 | 153.60 | 93.95 |
| Example 3 | 168.03 | 152.86 | 92.84 |
| Example 4 | 166.41 | 150.70 | 88.41 |
| Example 5 | 167.75 | 152.51 | 92.06 |
| Example 6 | 168.38 | 153.52 | 93.78 |
| Example 7 | 166.64 | 150.95 | 89.03 |
| Example 8 | 168.50 | 153.65 | 94.11 |
| Example 9 | 167.30 | 151.87 | 90.83 |
| Example 10 | 168.7 | 153.89 | 94.77 |
| Example 11 | 169.3 | 154.63 | 96.20 |
| Example 12 | 168.36 | 153.46 | 93.74 |
| Example 13 | 168.32 | 153.38 | 93.54 |
| Example 14 | 169.1 | 154.41 | 95.75 |
| Example 15 | 167.99 | 152.82 | 92.72 |
| Example 16 | 168.18 | 153.09 | 93.21 |
| Example 17 | 167.13 | 151.51 | 90.38 |
| Example 18 | 168.11 | 153.10 | 93.05 |
| Comparative Example 1 | 163.26 | 146.21 | 79.80 |
| Comparative Example 2 | 164.79 | 148.31 | 83.98 |
| Comparative Example 3 | 164.18 | 147.42 | 82.30 |
| Comparative Example 4 | 165.38 | 148.60 | 85.58 |
| Comparative Example 5 | 165.56 | 148.58 | 86.07 |
| Comparative Example 6 | 163.88 | 147.07 | 81.48 |
| Comparative Example 7 | 163.47 | 146.45 | 80.29 |

As shown in the results of Table 2, compared with the button cells in Comparative Examples 1-7, the button cells assembled with the cathode lithium compensation agents in Examples 1-18 have higher specific charge capacity, specific discharge capacity, and discharge capacity retention rate after 200 cycles of charging and discharging. That is, the lithium ion batteries composed of the cathode lithium compensation agent provided by the present disclosure exhibit higher capacity performance and cycle performance.
(1) Influence of an average particle size of the catalyst particles in the cathode lithium compensation agents on the battery properties.
   As can be seen from the comparison results of the data in Examples 1-4, when the catalyst particle size is too large (greater than 1,000nm) or too small (less than 10nm), both can reduce the lithium supplement gram capacity below 4.5V, thus the lithium supplement effect is slightly decreased, and the cycle performance is inferior to that in Example 1.
(2) Influence of the aspect ratio of the conductive agent in the cathode lithium compensation agent on the battery properties.
   As can be seen from the comparison results of the data in Example 1 and Examples 5-7, when the aspect ratio of the carbon nanotube is too small or too large, both may cause the reduced specific charge capacity of the cathode lithium compensation agent, thus the lithium supplement capacity is affected, and the improvement effect of cycle performance is limited.
(3) Influence of the content of the cathode lithium compensation material in the cathode lithium compensation agent on the battery properties.
   As illustrated by the comparison results of the data in Example 1 and Examples 8-9, when the content of cathode lithium compensation material in the cathode lithium compensation agent is lower, the delithiation potential is low, but the lithium supplement capacity is also slightly reduced, it causes deterioration of the discharging capacity and the cycle gain effect; when the content of cathode lithium compensation material in the cathode lithium compensation agent is higher, the distribution of the catalyst and the carbon nanotube in the cathode lithium compensation agent is relatively small, which results in deterioration of the catalytic effect, elevated delithiation platform, and decreased lithium supplement capacity of 4.5V or below.
(4) Influence of catalyst type in the cathode lithium compensation agent on the battery properties.
   As illustrated by the comparison results of the data in Example 1 and Example 10, when NiO is used as the catalyst, the specific charge capacity, the specific discharge capacity and the cycle performance of the batteries are greatly improved, it demonstrates that the strategy adopted in the present disclosure is also applicable to other catalysts.
(5) Influence of conductive agent type in the cathode lithium compensation agent on the battery properties.

As shown by the comparison results of the data in Example 1 and Example 11, when the aminated multi-walled carbon nanotube is adopted, the lithium supplement capacity is slightly decreased, but the cycle capacity retention ratio is desirable, it indicates that the aminated carbon nanotubes have a small influence on the lithium supplement capacity.

As illustrated by the comparison results of the data in Example 1 and Comparative Example 5, when the multi-walled carbon nanotube without a functional group is used for experiment, the catalytic effect of the catalyst and the conductive effect of the conductive agent cannot effectively form a synergy, it causes that the lithium capacity is low, and the cycle performance is not obviously improved.

As illustrated by the comparison results of the data in Example 1 and Comparative Example 7, if the point-like conductive agent Super P is used for performing the experiment, the discharge capacity retention rate after 200 cycles of charging and discharging is only 80.29%, the main reason may be that the point-like conductive agent cannot form a tightly wound three-dimensional spheroidal structure, and the synergistic effect of the catalyst and the conductive agent can hardly be exerted, so that the delithiation capacity is low at 4.5V, and the cycle performance is not substantially improved.

(6) Influence of the synergistic effect of the catalyst and the conductive agent in the cathode lithium compensation agent on the battery properties.

As illustrated by the comparison results of the data in Example 1 and Comparative Example 1, compared with the non-modified cathode lithium compensation agent, when the cathode electrode is prepared by adding the cathode lithium compensation agent in Example 1 of the present disclosure into the cathode electrode, the discharge and charge capacities are improved by approximately 9mAh/g than Comparative Example 1, and the discharge capacity retention rate after 200 cycles of charging and discharging is improved by 23.4%.

Comparative Example 2 defines the case that only the catalyst is added during the in-situ synthesis process of the cathode lithium compensation agent, the specific charge capacity is 164.79mAh/g, the specific discharge capacity is 148.31mAh/g, and the discharge capacity retention rate after 200 cycles of charging and discharging is 83.98%; Comparative Example 3 defines the case that only the multi-walled carbon nanotube is added during the in-situ synthesis process of the cathode lithium compensation agent, the specific charge capacity is 164.18mAh/g, the specific discharge capacity is 147.42mAh/g, and the discharge capacity retention rate after 200 cycles of charging and discharging is 82.30%; Example 1 describes the case that both the catalyst and the multi-walled carbon nanotube are added during the in-situ synthesis process of the cathode lithium compensation agent, the specific charge capacity is 170.1mAh/g, the specific discharge capacity is 155.81mAh/g, and the discharge capacity retention rate after 200 cycles of charging and discharging is 98.50%; as can be seen from the results in Example 1 and Comparative Examples 2-3, the coating of only the catalyst or the coating of only the conductive agent has a low gram capacity of the lithium supplement agent, it results in the poor lithium supplement effect, the improvement of cycle performance is not obvious; the present disclosure utilizes the functional group in the conductive agent and the free hydroxyl group on the catalyst surface to form a modified material through the bonding action, so that the modified material is crosslinked and wound on the surface of the cathode lithium compensation material from inside to outside, the conductive agent, the catalyst and the cathode lithium compensation material are tightly combined to form a stable, crosslinked and wound three-dimensional spheroidal structure; due to the wound structure of the conductive agent in the cathode electrode supplement particle, even if the cathode lithium compensation material is decomposed and disappeared in the formation process, it is unlikely to generate the large pores; in addition, the residual winding structure of the conductive agent after completion of the reaction of the cathode lithium compensation material can further improve the conductivity and avoid the problem of poor contact in the electrode; due to the synergistic action of the conductive agent and the catalyst, the delithiation potential of the cathode lithium compensation agent is reduced, and the delithiation capacity of the cathode lithium compensation agent is increased; when the cathode lithium compensation agent is applied to the cathode electrode plate, the capacity exertion and the cycle performance of the cathode electrode can be improved.

(7) Influence of the preparation method on the cathode lithium compensation agent on the battery properties.

Comparative Example 4 recites a cathode lithium compensation agent synthesized in a non-in-situ manner, as can be seen from comparison results of the data in Example 1 and Comparative Example 4, the specific charge capacity of Comparative Example 4 is 165.38mAh/g, the specific discharge capacity is 148.60mAh/g, and the discharge capacity retention rate after 200 cycles of charging and discharging is 85.58%; when the non-in-situ is adopted, that is, only the carbon nanotube, the catalyst and the synthesized cathode lithium compensation material are subjected to mixing and drying, the catalyst, the conductive agent and the cathode lithium compensation material cannot be tightly combined, the lithium supplement effect cannot be fully exerted, thus the discharge capacity is increased to a limited extent, and the improvement of cycle performance is not obvious.

As shown by the comparison results of the data in Example 1 and Comparative Example 6, during the in-situ synthesis process of the cathode lithium compensation agent, if the stirring is not performed, the in-situ nucleation sites of the cathode lithium compensation agent cannot be effectively controlled, it causes that the cathode lithium compensation agent, the catalyst and the conductive agent are not uniformly distributed in the structure of the final formed cathode lithium compensation agent, the delithiation of a portion of the cathode lithium compensation agent which is not in contact with the catalyst and the conductive agent may be difficult, it finally results in the low delithiation capacity of the cathode lithium compensation agent. As a result, when the cathode lithium compensation agent is applied in the cathode electrode plate, the lithium supplement capacity of the lithium supplement agent is limited, and the cycle performance is poor.

The above content describes in detail the preferred embodiments of the present disclosure, but the present disclosure is not limited thereto. A variety of simple modifications can be made in regard to the technical solutions of the present disclosure within the scope of the technical concept of the present disclosure, including a combination of individual technical features in any other suitable manner, such simple modifications and combinations thereof shall also be regarded as the content disclosed by the present disclosure, each of them falls into the protection scope of the present disclosure.

## Claims

1. A cathode lithium compensation agent, comprising a cathode lithium compensation material, and a modified material which is crosslinked and wound on the surface of the cathode lithium compensation material from inside to outside;
wherein the modified material comprises a conductive agent and a catalyst, and a functional group in the conductive agent is bonded with a free hydroxyl group on the surface of the catalyst; wherein the conductive agent is a linear or tubular one-dimensional conductive agent.

2. The cathode lithium compensation agent according to claim 1, wherein the cathode lithium compensation agent has a crosslinked and wound three-dimensional spheroidal structure; preferably, the cathode lithium compensation agent has a decomposition potential less than or equal to 4.7V, more preferably less than or equal to 4.5V, further preferably within the range of 3.5-4.5V;
preferably, the cathode lithium compensation agent has a conductivity within the range of 2×10⁻⁴-2×10⁻² S/cm, more preferably within the range of 1×10⁻³-2×10⁻² S/cm;
preferably, the cathode lithium compensation agent has an average particle size within the range of 0.1-20µm, more preferably within the range of 0.5-5µm;
preferably, the cathode lithium compensation agent is prepared through an in-situ reaction of the cathode lithium compensation material and the modified material;
further preferably, a lithium-containing alkaline solution and an acidic solution are respectively added into a dispersion liquid containing the modified material under the stirring condition, the lithium-containing alkaline solution and the acidic solution are subjected to co-precipitation to prepare the cathode lithium compensation material, and the modified material is crosslinked and wound on the surface of the cathode lithium compensation material from inside to outside.

3. The cathode lithium compensation agent according to claim 1 or 2, wherein the cathode lithium compensation agent is composed of the cathode lithium compensation material and the modified material;
preferably, the cathode lithium compensation material is contained in an amount of 30-99wt%, more preferably 60-90wt%; the modified material is contained in an amount of 1-70wt%, more preferably 10-40wt%, based on the total weight of the cathode lithium compensation agent; further preferably, the conductive agent is contained in an amount of 0.5-40wt%, more preferably 7-25wt%; the catalyst is contained in an amount of 0.5-30wt%, more preferably 3-15wt%, based on the total weight of the cathode lithium compensation agent.

4. The cathode lithium compensation agent according to any one of claims 1-3, wherein the molar ratio of the functional group in the conductive agent to the free hydroxyl group on the catalyst surface is (1-4) : 1, preferably (1.5-2) : 1;
further preferably, the mass fraction of the functional group in the conductive agent is within the range of 0.1-10wt%, more preferably within the range of 0.2-5wt%;
further preferably, the mass fraction of the free hydroxyl group on the catalyst surface is within the range of 0.1-5wt%, more preferably within the range of 0.5-2wt%;
preferably, the functional group in the conductive agent is selected from carboxyl and/or amino; further preferably, the free hydroxyl group on the catalyst surface is voluntarily formed by metal ions on the surface of the catalyst and water molecules in the air, or a plasma treatment.

5. The cathode lithium compensation agent according to any one of claims 1-4, wherein the cathode lithium compensation material is selected from the sacrificial organic lithium supplement material; preferably at least one selected from the group consisting of Li₂C₂O₄, Li₂C₄O₄, Li₂C₃O₅ and Li₂C₄O₆;
preferably, the conductive agent is selected from carbon nanotube and/or carbon nanofiber; preferably, the conductive agent has an aspect ratio within the range of 50-50,000, more preferably within the range of 500-20,000;
further preferably, the conductive agent has a length within the range of 5-100µm, more preferably within the range of 50-100µm; and a diameter within the range of 2-100nm, more preferably within the range of 5-50nm;
preferably, the catalyst is a metal compound which catalyzes the cathode lithium compensation material at room temperature with a decomposition energy barrier less than or equal to 4.4eV; further preferably, the catalyst is at least one selected from the group consisting of NiO, Ni₂O₃, NiO₂, MnO₂, Mn₂O₃, Mn₃O₄, CoO, Co₂O₃,Co₃O₄, MgO, FeO, Fe₂O₃, Fe₃O₄, ZnO, CuO, Ni(OH)₂, Co(OH)₂, Mg(OH)₂ and Mn(OH)₂;
further preferably, the catalyst has an average particle size within the range of 10-1,000nm, more preferably within the range of 20-100nm.

6. A method for preparing a cathode lithium compensation agent comprises the following steps:
(1) performing a first dispersion on a dispersion liquid containing a catalyst and a conductive agent, so as to connect a free hydroxyl group on the catalyst surface with a functional group in the conductive agent through the bonding effect, and subjecting the mixed solution to a first drying to obtain a modified material;
(2) subjecting the modified material, a dispersant and water to a second dispersion to obtain a dispersion liquid containing the modified material;
(3) adding a lithium-containing alkaline solution and an acidic solution into the dispersion liquid containing the modified material respectively under the stirring condition, subjecting the lithium-containing alkaline solution and the acidic solution to co-precipitation to prepare a cathode lithium compensation material; crosslinking and winding the modified material on the surface of the cathode lithium compensation material from inside to outside to obtain a cathode lithium compensation agent-rich precipitate;
(4) subjecting the cathode lithium compensation agent-rich precipitate to a filtering and a second drying sequentially to prepare a cathode lithium compensation agent;
wherein the conductive agent is a linear or tubular one-dimensional conductive agent.

7. The method according to claim 6, wherein in step (1),
the mass ratio of the catalyst to the conductive agent is (0.5-30) : (0.5-40), preferably (3-15) : (7-25);
preferably, in the dispersion liquid containing conductive agent, a solvent of the dispersion liquid is at least one selected from the group consisting of N-methyl pyrrolidone, 1,2-dichlorobenzene, dimethyl formamide and dimethyl acetamide;
preferably, the first dispersion mode is selected from ultrasonic dispersion, and a frequency is within the range of 500-5,000Hz, more preferably within the range of 1,000-2,000 Hz; and a time is within the range of 1-30min, more preferably within the range of 5-15min;
preferably, the first drying conditions comprise: a spraying speed is within the range of 1-10mL/min, more preferably within the range of 2-8 mL/min; an inlet air temperature is within the range of 100-150°C, more preferably within the range of 110-130°C.

8. The method according to claim 6 or 7, wherein in step (1),
the mass fraction of free hydroxyl groups on the catalyst surface is 0.1-5wt%, preferably 0.5-2wt%;
further preferably, the free hydroxyl group on the catalyst surface is voluntarily formed by metal ions on the surface of the catalyst and water molecules in the air, or a plasma treatment; preferably, the catalyst is a metal compound which catalyzes the cathode lithium compensation material at room temperature with a decomposition energy barrier less than or equal to 4.4 eV; further preferably, the catalyst is at least one selected from the group consisting of NiO, Ni₂O₃, NiO₂, MnO₂, Mn₂O₃, Mn₃O₄, CoO, Co₂O₃,Co₃O₄, MgO, FeO, Fe₂O₃, Fe₃O₄, ZnO, CuO, Ni(OH)₂, Co(OH)₂, Mg(OH)₂ and Mn(OH)₂;
preferably, the catalyst has an average particle size within the range of 10-1,000nm, more preferably within the range of 20-100nm;
preferably, the mass fraction of functional group in the conductive agent is 0.1-10wt%, more preferably 0.2-5wt%;
preferably, the functional group in the conductive agent is selected from carboxyl and/or amino; preferably, the conductive agent is selected from carbon nanotube and/or carbon nanofiber; preferably, the conductive agent has an aspect ratio within the range of 50-50,000, more preferably within the range of 500-20,000;
further preferably, the conductive agent has a length within the range of 5-100µm, more preferably within the range of 50-100µm; and a diameter within the range of 2-100nm, more preferably within the range of 5-50nm.

9. The preparation method according to any one of claims 6-8, wherein in step (2),
the second dispersion mode is selected from mechanical stirring, and the second dispersion conditions comprise: a rotating speed within the range of 2,000-6,000 rpm, preferably within the range of 4,000-5,000 rpm; and a time within the range of 2-8 h, preferably within the range of 5-6 h;
preferably, the mass ratio of the modified material to the dispersant is (2-10) : (0.5-10), more preferably (4-6) : (1-2);
preferably, the dispersant is at least one selected from the group consisting of sodium carboxymethylcellulose, polyvinylpyrrolidone, sodium dodecyl benzene sulfonate and a silane coupling agent;
in step (3),
preferably, a rotating speed of the stirring is within the range of 30-150 rpm, more preferably within the range of 50-80 rpm;
preferably, an addition flow rates of the lithium-containing alkaline solution and the acidic solution are respectively within the range of 0.5-20 mL/min, more preferably within the range of 1-5 mL/min;
preferably, the molar ratio of the lithium-containing compound in the lithium-containing alkaline solution to the acidic substance in the acidic solution is (1-2) : 1.1;
preferably, the lithium-containing alkaline solution is at least one selected from the group consisting of an aqueous lithium hydroxide solution, an aqueous lithium carbonate solution, and a buffer solution consisting of lithium hydroxide and/or lithium carbonate and ammonium hydroxide;
preferably, the co-precipitation conditions comprise: a temperature within the range of 20-80°C, more preferably within the range of 30-60°C; a pH within the range of 7-8, more preferably within the range of 7-7.5;
in step (4),
preferably, the second drying conditions comprise: a temperature within the range of 100-200°C, more preferably within the range of 100-150°C; and a time within the range of 1-10h, more preferably within the range of 5-8h.

10. A cathode electrode, wherein comprises the cathode lithium compensation agent according to any one of claims 1-5, or the cathode lithium compensation agent produced with the method according to any one of claims 6-9;
preferably, the content of the cathode lithium compensation agent in the cathode electrode is within the range of 0.1-10wt%, more preferably within the range of 0.5-5wt%.
